# EUROPÄISCHE PATENTSCHRIFT

(11) **EP 1 389 702 B1**
(45) Veröffentlichungstag und Bekanntmachung des Hinweises auf die Patenterteilung: **09.05.2007**
(21) Anmeldenummer: 03016474.3
(22) Anmeldetag: 22.07.2003
(51) Int. Cl.: F16J 15/12

(54) **Verfahren zur Herstellung von Dichtelementen sowie Dichtelement**
Method for making seal elements and a seal element
Méthode de fabrication pour éléments d'étanchéité, et élément d'étanchéité

(30) Priorität: 13.08.2002 DE 10237019
(43) Veröffentlichungstag der Anmeldung: 18.02.2004
(73) Patentinhaber: Federal-Mogul Sealing Systems Bretten GmbH, 75015 Bretten (DE)
(72) Erfinder: Salameh, Ralf, 75053 Gondelsheim (DE)

(56) Entgegenhaltungen:
- EP-A- 0 922 888
- DE-A- 4 125 344
- DE-A- 4 213 653
- FR-A- 2 574 891

## Beschreibung

Die Erfindung betrifft ein Verfahren zur Herstellung eines metallisch verstärkten Dichtelementes.

Der DE-C 41 25 344 ist eine metallverstärkte Gummiformdichtung zum gegenseitigen Abdichten zweier mittels Schraubenbolzen aufeinander zu pressender Formteile zu entnehmen, gebildet aus einem allseits umvulkanisierten Trägerblech, wobei die aufvulkanisierte Gummischicht längsverlaufende Dichtwülste und um die, die Dichtung durchquerenden Schraubenlöcher zumindest innen - halbseitig herumlaufende Dichtlippen aufweist und bei der bei den Schraubenlöcher Abstützungen vorgesehen sind, die die Höhe des Dichtspaltes zwischen den beiden Formteilen begrenzen.
In der DE-C 42 13 653 wird eine Gummiformdichtung beschrieben, bestehend aus einem mit einer Gummimischung umspritzten, mit Öffnungen versehenen Trägerblech und mit um die Öffnungen herum angeordneten ringförmigen Stützelementen, welche in das Trägerblech eingefügt sind. Die Stützelemente sind mit einer umlaufenden Nut versehen. Die Öffnungen des Trägerbleches weisen einen dem Nutgrunddurchmesser entsprechenden Durchmesser auf und sind mit einem nach außen führenden Ausschnitt versehen, dessen Breite geringfügig unterhalb dieses Durchmessers liegt.
Es gibt Dichtsysteme, bei denen es erforderlich ist, Dichtlippen nur auf einer Seite eines Trägermateriales aufzubringen. Bei dem vorab zitierten Stand der Technik ist dies so nicht möglich.
Allgemein bekannt ist, dass Anwendungen mit einseitiger Abdichtung und Trägerdichtungen bei heutigen Anwendungen in Kunststoff ausgeführt werden. Der Trägerrahmen wird hierbei als Spritzteil ausgeführt, so dass die Einbringung einer einseitigen Nut kein Problem darstellt. Bei Kunststoffträgern sind jedoch folgende Probleme gegeben: Sie weisen keine ausreichende Medienbeständigkeit auf, ihr Setzverhalten ist nicht optimal und sind in den meisten Fällen nur zur Aufnahme von Silikon-Dichtprofilen geeignet.

Soll hingegen ein metallisches Trägerelement zum Einsatz gelangen und soll eine entsprechende Einprägung für das Gummi- oder Kunststoffmaterial des Dichtbereiches gebildet werden, stellen sich folgende Probleme:
Bei der Druckumformung einer durchgehenden Fläche ergibt sich keine oder nur eine geringe Eindrücktiefe, da kein oder kaum Material verdrängt wird.

Aus der FR-A-2574891 ist eine Flachdichtung zu entnehmen die auf beiden Seiten mit einem elastomeren Material beschichtet ist. Zu diesem Zweck ist ein Trägerelement mit Löchern und Nuten versehen. Nach Ausbildung der Nut kann das elastomere Material durch die Löcher fließen. Maßnahmen zur Verschließung der Löcher mit metallischen Material sind nicht offenbart.

Der Erfindung liegt die Aufgabe zugrunde, ein Verfahren zur Herstellung eines metallisch verstärkten Dichtelementes bereitzustellen, das unter Einsatz eines metallischen Trägerelementes es dennoch ermöglicht, dass lediglich eine einseitige Abdichtung im Bereich des Trägerelementes erzeugt werden kann, ohne dass die beim Stand der Technik beschriebenen Probleme auftreten. Ferner soll ein Dichtelement konzipiert werden, das einfach im Aufbau und der Handhabung ist.

Diese Aufgabe wird erfindungsgemäß durch die Merkmale des Patentanspruch 1 gelöst.

Vorteilhafte Weiterbildungen des erfindungsgemäßen Verfahrens sind den zugehörigen Unteransprüchen zu entnehmen.
Mit dem Erfindungsgegenstand ist es nun möglich, insbesondere an aus Blechstreifen gebildeten Trägerelementen, vorzugsweise aus Aluminium oder einer Aluminiumlegierung, entsprechende Prägebereiche vorzusehen, wobei im Verlauf der Druckumformung das Material in die vorab ausgestanzten Ausnehmungen, diese weitestgehend oder gar vollständig verschließend, verdrängt wird. Durch diese Maßnahme kann die Prägetiefe des Trägerelementes beträchtlich vergrößert werden. Sollte es nicht möglich sein, dass das verdrängte Material die Ausnehmungen vollständig schließt, muß beim späteren Einspritzen des, insbesondere aus Elastomermaterial bestehenden Dichtprofils zusätzlich von der unteren Seite des Trägerelementes eine Abdichtung vorgesehen werden.
Zum Einsatz gelangen derartige Dichtelemente vorteilhafterweise als statische Abdichtungen in Deckelbereichen von Gehäusen oder dergleichen.
Der Erfindungsgegenstand ist anhand eines Ausführungsbeispieles in der Zeichnung dargestellt und wird wie folgt beschrieben. Es zeigen:

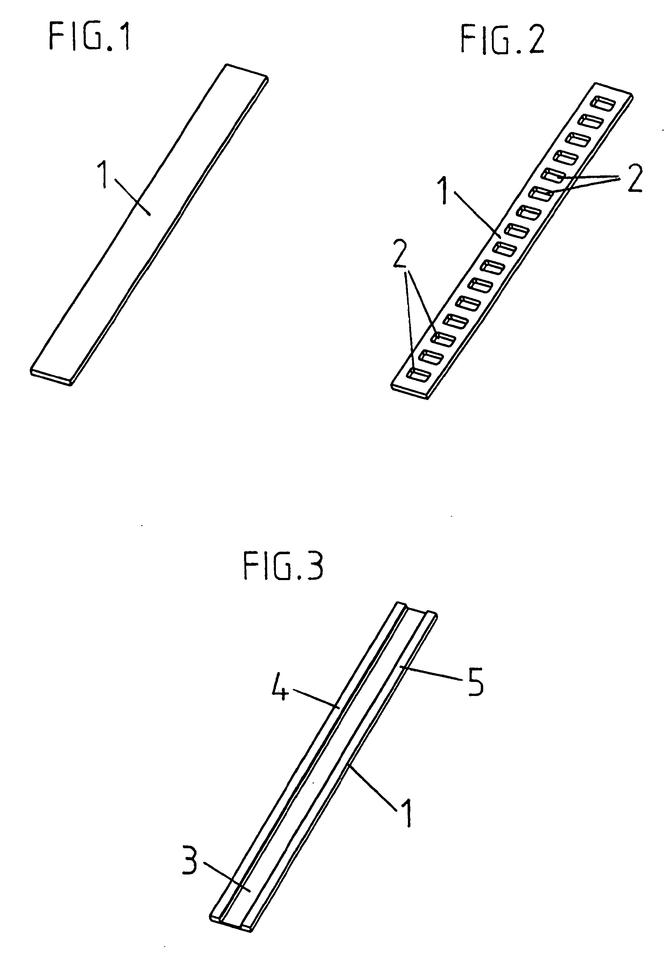

- Figuren 1 bis 5: Herstellungsvorgang eines metallisch verstärkten erfindungsgemäßen Dichtelementes.

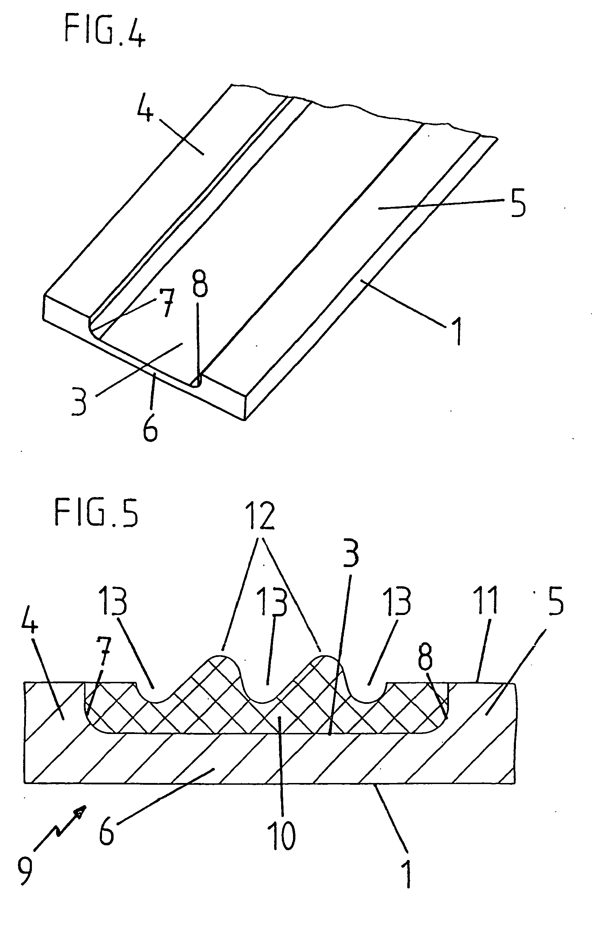

Die Figuren 1 bis 5 zeigen den Herstellungsablauf eines metallisch verstärkten Dichtelementes, beispielsweise einsetzbar als statische Dichtung zwischen einem Gehäuse und einem Deckel (nicht dargestellt). Figur 1 zeigt einen, in diesem Beispiel aus Aluminium bestehenden Blechstreifen 1 als Trägerelement, der vom Coil abgewickelt werden kann. Der Blechstreifen 1 durchläuft eine Stanzmaschine und wird, gemäß Figur 2, mit einer Vielzahl von parallel zueinander verlaufenden, in diesem Beispiel rechteckigen Ausnehmungen 2 versehen. Gemäß Figur 3 durchläuft der Blechstreifen 1 den Bereich einer Prägemaschine. Infolge der dort ausgeübten Druckkräfte wird das verbleibende Material des Blechstreifens 1 in die Ausnehmungen 2 gemäß Figur 2 verdrängt und verschließt diese im wesentlichen vollständig. In Figur 3 dargestellt ist, dass die in Figur 2 angeführten Öffnungen vollständig verschlossen sind, so dass der Blechstreifen 1 dann eine durchgehende Innenfläche 3 aufweist. Infolge des Prägevorganges werden seitlich höhere Bereiche 4,5 gebildet, so dass ein U-förmiger Querschnitt entsteht. In diesem Zustand kann der Blechstreifen 1 nun abgelängt werden, was beispielsweise in Figur 4 angedeutet ist. Erkennbar sind die seitlich höheren Bereiche 4, 5, der Verbindungsbereich 6 sowie die durchgehende Innenfläche 3. Die Bereiche 4, 5 gehen über Radien 7, 8 in den Verbindungsbereich 6 über.
Figur 5 zeigt nun das fertige Dichtelement 9, beinhaltend das geprägte Trägerelement 1. Erkennbar sind die höheren Bereiche 4, 5, der Verbindungsbereich 6 sowie die Übergangsradien 7, 8. Das Trägerelement 1 bildet somit einen etwa U-förmigen Querschnitt. Einseitig wird in den Freiraum (Innenfläche) ein aus Elastomermaterial bestehendes Dichtprofil 10 eingespritzt, wobei über die Begrenzungskante 11 des Trägerelementes 1 überstehende Dichtlippen 12 gebildet werden. Einerseits zwischen den Dichtlippen 12 und andererseits im freien Bereich des Elastomermateriales sind talartige Ausnehmungen 13 vorgesehen, in die das Material der Dichtlippen 12 bei Druckeinwirkung im Einbauzustand ausweichen kann.

## Patentansprüche

1. Verfahren zur Herstellung eines metallisch verstärkten Dichtelementes (9), indem zunächst ein metallisches Trägerelement (1) mit mehreren Ausnehmungen (2) versehen wird, dann das verbleibende Material des Trägerelementes (1) durch Prägen in die Ausnehmungen (2) verdrängt wird, sodass die Ausnehmungen (2) im wesentlichen vollständig verschlossen werden und das Trägerelement (2) einen U-förmigen Querschnitt mit einer durchgehenden Innenfläche (3) erhält und anschließend in die Innenfläche (3) ein aus Elastomermaterial bestehendes Dichtprofil (10) eingespritzt wird.

2. Verfahren nach Anspruch 1, **dadurch gekennzeichnet, dass** als Trägerelementes (1) ein Blechstreifen aus Aluminium oder einer Aluminiumlegierung ist.

3. Verfahren nach Anspruch 1 oder 2, **dadurch gekennzeichnet, dass** in das Trägerelement (1) eine Vielzahl parallel zueinander verlaufender Ausnehmungen (2) durch Stanzen eingebracht werden.

4. Verfahren nach einem der Ansprüche 1 bis 3, **dadurch gekennzeichnet, dass** das Dichtprofil (10) mit mehreren sich über die Begrenzungskante (11) des Trägerelementes (1) erstreckenden Dichtlippen (12) sowie im Bereich der Innenkontur des Trägerelementes verbleibenden Ausnehmungen ausgebildet ist.

## Claims

1. Method of producing a metallically reinforced sealing element (9), in that initially a metallic carrier element (1) is provided with several cut-outs (2), then the remaining material of the carrier element (1) is displaced into the cut-outs (2) by stamping, so that the cut-outs (2) are substantially completely closed and the carrier element (2) acquires a U-shaped cross-section having a continuous inner surface (3) and a sealing profile (10) consisting of elastomer material is then injected into the inner surface (3).

2. Method as claimed in claim 1, **characterised in that** a sheet metal strip consisting of aluminium or an aluminium alloy is used as the carrier element (1).

3. Method as claimed in claim 1 or 2, **characterised in that** a multiplicity of cut-outs (2), which extend in parallel with one another, are introduced into the carrier element (1) by punching.

4. Method as claimed in any one of claims 1 to 3, **characterised in that** the sealing profile (10) is formed with several sealing lips (12), which extend over the boundary edge (11) of the carrier element (1), and with recesses which remain in the region of the inner contour of the carrier element.

## Revendications

1. Procédé de réalisation d'un élément d'étanchéité (9) avec un renfort métallique, dans lequel, tout d'abord, plusieurs évidements (2) sont réalisés dans un support (1) métallique, puis le matériau subsistant du support (1) est refoulé par estampage dans les évidements (2), de telle sorte que les évidements (2) sont sensiblement complètement obturés et le support (1) obtient une section en forme de U avec une surface intérieure (3) continue et, ensuite, un profilé d'étanchéité (10), réalisé dans un matériau élastomère, est injecté dans la surface intérieure (3).

2. Procédé selon la revendication 1, **caractérisé en ce qu'**une bande de tôle en aluminium ou dans un alliage d'aluminium est prévue pour former un support (1).

3. Procédé selon la revendication 1 ou 2, **caractérisé en ce que** dans le support (1) une pluralité d'évidements (2), parallèles entre eux, sont réalisés par découpe.

4. Procédé selon l'une quelconque des revendications 1 à 3, **caractérisé en ce que** le profilé d'étanchéité (10) est réalisé avec plusieurs lèvres d'étanchéité (12), qui sont en saillie au-delà du bord de délimitation (11) du support (1), ainsi qu'avec des évidements subsistant dans la zone du contour intérieur du support.
